# EUROPÄISCHE PATENTSCHRIFT

(11) **EP 0 664 387 B1**
(45) Veröffentlichungstag und Bekanntmachung des Hinweises auf die Patenterteilung: **22.10.1997**
(21) Anmeldenummer: 94119024.1
(22) Anmeldetag: 02.12.1994
(51) Int. Cl.: F02D 41/24

(54) **Verfahren zum Ändern der Arbeitsweise eines Steuergeräts von Kraftfahrzeugen**
Process to change the working mode of a control device in vehicles
Procédé pour changer la mode de travail d'un appareil de commande dans les voitures automobiles

(30) Priorität: 24.01.1994 DE 4401891
(43) Veröffentlichungstag der Anmeldung: 26.07.1995
(73) Patentinhaber: Bayerische Motoren Werke Aktiengesellschaft, 80788 München (DE)
(72) Erfinder: Albert, Christian, D-82380 Peissenberg (DE); Negele, Anton, D-82319 Starnberg (DE)

(56) Entgegenhaltungen:
- EP-A- 0 325 960
- EP-A- 0 474 493
- DE-A- 3 714 325
- DE-A- 4 126 373

## Beschreibung

Die Erfindung bezieht sich auf ein Verfahren nach dem Oberbegriff des Patentanspruchs 1.

In diesem Zusammenhang ist es aus der DE 41 26 373 A1 bekannt, eine von zwei möglichen Arbeitsweisen des Steuergeräts auszuwählen, indem über zwei Eingangsleitungen für Eingangssignale zusätzlich eine von zwei zueinander inversen Informationen aufgegeben wird.

Es ist ferner bekannt, die Programm-Kennung in einem löschbaren Speicher des Steuergeräts abzulegen, den Programmspeicher zu löschen und mit dem neuen Programm zu laden. Die Programm-Kennung wird zusammen mit dem Programm von außen her erneut eingegeben. Tritt während des Umprogrammiervorgangs eine Bordnetzstörung auf, so besteht die Gefahr, daß die gespeicherte Programm-Kennung verloren geht mit der Folge, daß dann auch das neue Programm nicht mehr einspeicherbar ist. Ursache ist die dann fehlende Programm-Kennung. Dabei ist unter Programm-Kennung ein Identifizierungskennzeichen und eine Minimal-Programmroutine, die sog. Bootroutine zu verstehen, aufgrund derer das Steuergerät mit einem Programm, hier dem neuen Programm, zu arbeiten in der Lage ist.

Der Erfindung liegt die Aufgabe zugrunde, ein Verfahren der eingangs genannten Art zu schaffen, das in der Zahl der möglichen neuen Arbeitsweisen nicht beschränkt ist und das auch das Auftreten einer Bordnetzschwankung während des Umprogrammiervorgangs verkraftet. Darunter ist die Tatsache zu verstehen, daß eine derartige Bordnetzschwankung in keinem Fall zu einem Total-Ausfall des Steuergeräts führt.

Die Erfindung löst diese Aufgabe durch die kennzeichnenden Merkmale des Patentanspruchs 1.

Durch das bleibende Abspeichern der Programm-Kennung als Referenz-Programm-Kennung kann auch ein Bordnetzausfall nicht zu einem Verlust dieser Information führen. Das erneute Einschreiben dieser als Referenz-Programm-Kennung gespeicherten Kennung zu Beginn der Neu-Programmierung des Steuergeräts stellt sicher, daß auch dann, wenn der Programmiervorgang gestört wird, diese Kennung in jedem Fall bleibend vorhanden ist. Das Steuergerät ist damit in jedem Fall in der Lage, unter Verwendung der Programm-Kennung einen ersten Minimalbetrieb durchzuführen und, sofern das Programm vollständig vorhanden ist, auch entsprechend diesem Programm zu arbeiten. Da dieses dann vorhandene Programm vielfältig variieren kann, ergibt sich daraus eine entsprechende Anzahl von Arbeitsweisen, mit denen das Steuergerät dann betrieben werden kann.

Der angegebene Sachverhalt einer Bordnetzschwankung ist deshalb von besonderer Bedeutung, weil das Laden eines neuen Programms in der Regel mehrere Minuten beansprucht. Sofern die interne Bordnetzspannungsquelle als Energiespeicher herangezogen wird, kann diese während des Programmvorgangs beispielsweise aufgrund zusätzlicher Leistungsanforderungen oder aufgrund sonstiger Störungen ihre Funktion verlieren. Da derartige Situationen nicht vorhersehbar sind und auch die Kapazität der Energiequelle nicht ohne weiteres vorab überprüft werden kann, besteht eine besondere Notwendigkeit, den Umprogrammiervorgang so zu gestalten, daß auch eine evtl. Störung problemlos verkraftet wird. Beispielsweise ist es dann lediglich erforderlich, den Programmiervorgang zu wiederholen.

Die Programm-Kennung kann für die verschiedenen Betriebsweisen des Steuergeräts unverändert sein. Es ist aber auch möglich, diese Kennung in Verbindung mit der Übernahme der Referenz-Programm-Kennung zu verändern. Damit wird es möglich, beispielsweise die Historie, z.B. die Anzahl der verschiedenen Programmiervorgänge oder aber auch den Programm-Entwicklungsstand zu dokumentieren und/oder entsprechend dem jeweils aktuellen Programm die Anfangsroutinen zu aktualisieren.

Zusätzlich zur Neuprogrammierung des Steuergeräts ist es möglich, auch die zugehörigen Daten zu verändern. Auch den Daten kann dabei eine Daten-Kennung zugeordnet sein. Um auch diese vor einem möglichen Verlust während der Eingabe der neuen Daten zu schützen, kann in entsprechender Weise auch die Daten-Kennung als Referenz-Daten-Kennung abgespeichert und vor dem Eingeben der neuen Daten als Daten-Kennung in den Datenspeicher aufgenommen werden.

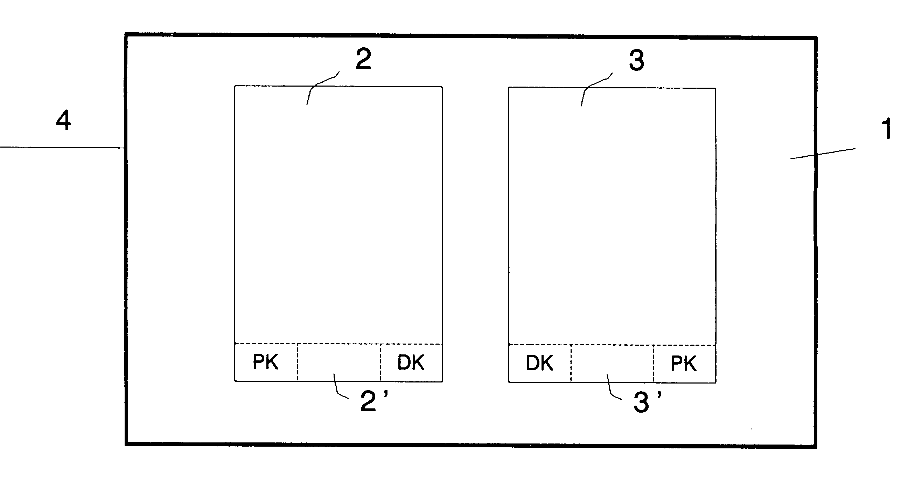

Das erfindungsgemäße Verfahren ist anhand der Zeichnung weiter erläutert. In der einzigen Fig. ist schematisch ein Steuergerät 1 dargestellt, das einen Programmspeicher 2 und einen Datenspeicher 3 enthält. Die beiden Speicher 2 und 3 besitzen ferner einen löschbaren, nicht flüchtigen Speicherabschnitt 2' bzw. 3', der vorzugsweise als Flash-Speicher (i.f. Flash genannt) ausgebildet ist. Die beiden Flash's 2' und 3' enthalten Kennungen PK bzw. DK für die zugehörigen Speicher.

Zum Eingeben eines neuen Programms in den Programmspeicher 2 wird zunächst der Inhalt des Flash's 2' in den Flash 3' eingeschrieben. Im Flash 3' liegt somit die Daten-Kennung DK des Datenspeichers 3 sowie die Programm-Kennung PK vor. Anschließend wird der Speicher 2 vollständig gelöscht. Damit wird auch das Flash 2' gelöscht.

Vor Eingabe des neuen Programms, beispielsweise über eine serielle Schnittstelle 4 wird die Programm-Kennung PK aus dem Flash 3' ausgelesen und erneut in das Flash 2' geschrieben. Anschließend wird über die Diagnoseschnittstelle 4 das neue Programm in die Programmspeicher 2 geladen. Tritt während des Vorgangs, der mit der Übernahme der Programm-Kennung PK vom Flash 2' ins Flash 3' beginnt und mit der Eingabe der letzten Programmanweisung über die Diagnoseschnittstelle 4 eine Programmspeicher 2 endet, ein Bordnetzausfall oder eine sonstige Bordnetzstörung auf, so hat dies allenfalls zur Folge, daß das Programm und/oder die Programm-Kennung PK im Programmspeicher 2 unvollständig ist bzw. fehlt. Dennoch ist das Steuergerät 1 weiterhin in der Lage, nach dem erneuten Eingeben des Programms - unter vorheriger Übernahme der Programm-Kennung PK vom Flash 3' in das Flash 2' - entsprechend dem neuen Programm zu arbeiten. Ein Verlust der Programm-Kennung ist in jedem Fall wirksam unterbunden.

Mit dem Abspeichern der Programm-Kennung PK im Flash 2' verbunden kann auch eine Änderung dieser Programm-Kennung sein. Es ist beispielsweise möglich, diese dem jeweiligen neuen Programm anzupassen oder die Anzahl der Neu-Programmiervorgänge zu dokumentieren.

Entsprechend ist es möglich, auch die Daten neu einzugeben. Hierfür kann eine Daten-Kennung DK vorab vom Flash 3' ausgelesen und in das Flash 2' eingegeben werden. Vor der Aufnahme der neuen Daten kann diese Daten-Kennung erneut aus dem Flash 2' ausgelesen und unter ggf. möglicher Aktualisierung im Flash 3' abgespeichert werden. Auch hier hat ein evtl. Bordnetzausfall nicht zur Folge, daß die in der Daten-Kennung enthaltene Information, beispielsweise über die Art oder Historie der Daten, während der Daten-Neueingabe verloren gehen kann. Das gesamte Steuergerät ist jeder Zeit gegen Bordnetzausfälle insoweit geschützt, als nach sich anschließender entsprechender Neueingabe von Daten und/oder Programm das Steuergerät 1 die gewünschte Arbeitsweise besitzt.

Anstelle der körperlichen Abtrennung der Speicherabschnitte 2' und 3' können auch die Speicher 2 und 3 selbst als Flash ausgebildet werden und die Programm- und Datenkennung physikalisch nicht lokalisierbar, sondern lediglich datenmäßig vorhanden sein. Zur Vorbereitung einer Programm- oder Daten-Neueingabe wird dann die zugehörige Programm (-bzw. Daten)kennung in das andere Flash 3 (bzw. 2) gebracht, das Flash 2 (bzw. 3) dann gelöscht und die Kennung aus dem Flash 3 (bzw. 2) in das Flash 2 (bzw. 3) eingelesen.

Durch die Erfindung wird es möglich, das Steuergerät mit einem neuen Programm zu versehen ohne dabei Gefahr zu laufen, daß durch eine Bordnetzschwankung oder einen Bordnetzausfall während des Umprogrammiervorgangs das Steuergerät völlig ausfällt.

## Patentansprüche

1. Verfahren zum Ändern der Arbeitsweise eines Steuergeräts von Kraftfahrzeugen, das ein Programm eine Programm-Kennung für dieses Programm und vorgegebene Daten aufweist, dadurch gekennzeichnet, daß zum Ändern des Programms zunächst eine zugeordnete Programm-Kennung ausgelesen und bleibend als Referenz-Programm-Kennung gespeichert wird, daß das Programm und die Programm-Kennung gelöscht werden, daß die Referenz-Kennung anschließend als Programm-Kennung eingeschrieben wird und daß anschließend das neue Programm geladen wird.

2. Verfahren nach Anspruch 1, dadurch gekennzeichnet, daß die Programm-Kennung bei oder nach dem neuen Einschreibvorgang geändert wird.

3. Verfahren nach Anspruch 1 oder 2, dadurch gekennzeichnet, daß zum Ändern der Daten zuerst eine zugeordnete Daten-Kennung als Referenz-Daten-Kennung abgespeichert wird, daß der Datenspeicher gelöscht wird, daß die Daten-Kennung erneut eingelesen wird und daß anschließend die neuen Daten abgespeichert werden.

## Claims

1. A method for changing the operating mode of a control device of motor vehicles which is provided with a program, a program identifier for this program and pre-defined data, characterised in that to change the program firstly a given program identifier is read and stored continuously as the reference program identifier, in that the program and program identifier are erased, that the reference identifier is subsequently written in as the program identifier and the new program is then loaded.

2. A method according to claim 1, characterised in that the program identifier is changed in the course of the new writing-in process or thereafter.

3. A method according to claim 1 or 2, characterised in that to change the data first a given data identifier is stored as the reference data identifier, the data memory is erased and the data identifier is read in again and then the new data is stored.

## Revendications

1. Procédé pour modifier le fonctionnement d'un appareil de commande de véhicule automobile qui comporte un programme, une désignation de programme relative à ce programme et des données prédéterminées pour modifier le programme, selon lequel
- on extrait tout d'abord la désignation de programme et on l'enregistre de manière permanente comme désignation de référence de programme,
- on efface le programme et la désignation de programme,
- puis on enregistre la désignation de référence comme désignation de programme et on charge le nouveau programme.

2. Procédé selon la revendication 1,
caractérisé en ce que
la désignation de programme est modifiée au cours ou après le nouvel enregistrement.

3. Procédé selon la revendication 1 ou 2,
caractérisé en ce que
pour modifier les données, on met en mémoire tout d'abord une désignation de données correspondante comme désignation de données de référence, puis on efface la mémoire de données et on enregistre de nouveau la désignation de données, puis on met en mémoire les nouvelles données.
